# EUROPEAN PATENT SPECIFICATION

(11) **EP 3 420 765 B1**
(45) Date of publication and mention of the grant of the patent: **31.01.2024**
(21) Application number: 17773287.2
(22) Date of filing: 31.03.2017
(51) Int. Cl.: H04W 72/04, H04L 5/00

(54) **EFFICIENT OPERATION FOR SYSTEMS WITH LARGE CARRIER BANDWIDTH**
EFFIZIENTER BETRIEB FÜR SYSTEME MIT GROSSER TRÄGERBANDBREITE
FONCTIONNEMENT EFFICACE POUR DES SYSTÈMES AYANT UNE GRANDE LARGEUR DE BANDE DE PORTEUSES

(30) Priority: 31.03.2016 US 201662315699 P; 14.09.2016 US 201662394274 P; 19.12.2016 US 201662436008 P; 11.01.2017 US 201762444879 P
(43) Date of publication of application: 02.01.2019
(73) Proprietor: MEDIATEK INC., Hsin-Chu 300 (TW)
(72) Inventor: LIAO, Pei-Kai, Nantou County Taiwan 551 (TW); HSU, Chia-Chun, New Taipei City 231 (TW); CHEN, Tao, Beijing 100020 (CN)
(74) Representative: Hoefer & Partner Patentanwälte mbB
(86) International application number: PCT/CN2017/078929
(87) International publication number: WO 2017/167257

(56) References cited:
- EP-A1- 2 946 623
- EP-B1- 2 946 623
- WO-A1-2014/147397
- WO-A2-2011/017515
- WO-A2-2011/038252
- CN-A- 103 108 392
- US-A1- 2016 043 843

## Description

### TECHNICAL FIELD

The disclosed embodiments relate generally to wireless communication, and, more particularly, to methods and apparatus for efficient operation for large carrier bandwidth as defined in the pre-characterizing parts of the independent claims. Such a method and an apparatus are disclosed in EP 2 946 623 A1 and in EP 2 946 623 B1.

### BACKGROUND

Mobile networks communication continues to grow rapidly. The mobile data usage will continue skyrocketing. New data applications and services will require higher speed and more efficient. Large data bandwidth application continues to attract more consumers. New technologies are developed to meet the growth such as carrier aggregation (CA), which enables operators, vendors, content providers and the other mobile users to meet the increasing requirement for the data bandwidth. However, carrier aggregation assumes multiple RF chains for signal reception even for physically contiguous spectrum, which introduces long transition time to activate more carriers from one carrier for larger data bandwidth and decreases the efficiency of the data transmission.

In frequency bands above 3GHz, there could be a block of physically continuous spectrum up to hundreds of MHz. The single carrier operation for such large continuous spectrum is more efficient in both the physical (PHY) control, with lower control signaling overhead, and PHY data, with higher trunking gains. It is, therefore, to configure the large contiguous spectrum for large data transmission instead of configuring multiple small spectrum resources. However, from the system level, not all the user equipments (UEs) require large channel bandwidth. Further, for each UE, not all applications require large channel bandwidth. Given that wideband operation requires higher power consumption, the use of the large spectrum resource for control signaling monitoring and low-data-rate services is not ideal for power saving and bandwidth efficiency.

Improvements and enhancements are required for efficient operation for systems with large carrier bandwidth.

### SUMMARY

An apparatus and a method are provided for virtual carrier operation in wireless systems with large carrier bandwidth and are defined in the independent claims. The dependent claims define preferred embodiments thereof. According to the invention, virtual carrier (VC) with a block of physically contiguous radio resources within a component carrier is configured. The UE acquires synchronization and system information with a first channel bandwidth over one component carrier and one or more component carrier is configured after completing network entry. The LTE is configured with a downlink (DL) common virtual carrier (CVC) and an uplink (UL) CVC for each component carrier, wherein the DL CVC and UL CVC carry control information for the UE. The UE is configured with one or more DL/LTL dedicated VCs (DVCs), which carry data services for each component carrier. The UE activates the configured VCs over the activated component carriers. The UE obtains DVC activates the configured VCs over the activated component carriers.

The UE switches on/off the configured VCs upon receiving the switch command. The UE obtains a VC configuration switch command and subsequently switch on/off one or more configured VCs based on the received switch command. According to the invention, the switch command is through a PHY signaling. The invention is defined by the claims.

### BRIEF DESCRIPTION OF THE DRAWINGS

The accompanying drawings, where like numerals indicate like components, illustrate embodiments useful for understanding the invention.
Figure 1 illustrates a system diagram of a wireless network with virtual carriers
Figure 2A illustrates an exemplary diagram of a DVC configured with no control information.
Figure 2B illustrates an exemplary diagram of a DVC configured with beacon signal and common/shared reference signal information.
Figure 2C illustrates an exemplary diagram of a DVC configured with beacon signal information.
Figure 3 illustrates different configures of DL and UE CVCs for a UE.
Figures 4A shows an exemplary diagram for the UE in the idle mode, operates with accessing the CVC in the Pcell only.
Figure 4B shows an exemplary diagram for UE in a connected mode, the UE can access in a CVC and DVC in the PCell.
Figure 4C shows an exemplary diagram for UE in a connected mode, the UE can access in a SCell.
Figure 5 illustrates an exemplary flow diagram of the virtual carrier operation procedure
Figure 6 illustrates an exemplary flow diagram of the network entry and virtual carrier configuration procedure.
Figure 7 illustrates an exemplary flow diagram of virtual carrier switch-on/off procedure
Figure 8 illustrates an exemplary flow diagram of UE triggered UL VC switch command
Figure 9 illustrates an exemplary flow diagram of the RRM measurement for virtual carriers
Figure 10 shows an exemplary flow chart of the UE performing network entry and VC configuration in a VC operation.
Figure 11 shows an exemplary flow chart of the UE performing VC switch command in a VC operation.

### DETAILED DESCRIPTION

Reference will now be made in detail to some embodiments, examples of which are illustrated in the accompanying drawings.

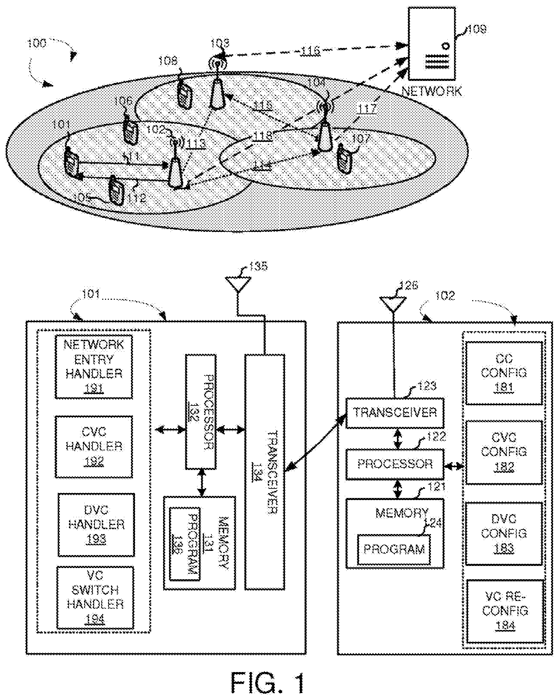

Figure 1 illustrates a system diagram of a wireless network 100 with virtual carriers. Wireless communication system 100 includes one or more wireless networks each of the wireless communication network has a fixed base infrastructure units, such as receiving wireless communications devices or base unit 102 103, and 104, forming wireless networks distributed over a geographical region. The base unit may also be referred to as an access point, an access terminal, a base station, a Node-B, an eNode-B, or by other terminology used in the art. Each of the base unit 102, 103, and 104 serves a geographic area. Backhaul connections 113, 114 and 115 connect the non-co-located receiving base units, such as 102, 103, and 104. These backhaul connections can be either ideal or non-ideal.

A wireless communications device 101in wireless network 100 is served by base station 102 via uplink 111 and downlink 112. Other UEs 105, 106, 107, and 108 are served by different base stations. UEs 105 and 106 are served by base station 102. UE107 is served by base station 104. UE 108 is served by base station 103.

In one embodiment, wireless communication network 100 operates with large contiguous radio spectrums. UE 101 while accessing wireless communication network 100, acquires synchronization information and system information using a default bandwidth. Upon detecting the wireless network, UE 101 can get component carrier configuration (e.g. cell identification) and initial virtual carrier configuration through system information. A virtual carrier (VC) is a block of physically contiguous radio resources within a component carrier. In one embodiment, multiple VCs within a component carrier may share the same cell ID. In another embodiment, multiple VCs within a component carrier may use different cell IDs. When UE 101 accesses the network, a downlink (DL) common virtual carrier (CVC) is configured to the UE. The DL CVC is used for network entry, idle mode operation, radio resource management (RRM) measurement and data services. The DL CVC has beacon signal (or synchronization signal), system information, common PHY control and reference signal for RRM measurement. The physical location in frequency domain of the CVC can be at the center of a component carrier or any other location of the component carrier. In one embodiment, UE 101 gets the channel bandwidth of the DL CVC and an offset value of the DL CVC from the central frequency of the component carrier in the system information. There are physical channels and reference signals, such as pilots for demodulation or channel state information measurement, to support the dedicated control and/or data operation. In one embodiment, there is one single DL CVC within a component carrier for UE 101. There could be multiple DL CVCs for multiple UEs within one component carrier. An uplink (UL) CVC configuration including the bandwidth and the physical location in frequency domain of the UL CVC is also broadcasted in the system information. There is common PHY control for random access (RACH) in the UL CVC. There are channels and reference signals (e.g. pilots for demodulation or channel state information measurement) to support dedicated PHY control/data operation. In one embodiment, there are channels and reference signals, such as pilots for demodulation or channel state information measurement, to support dedicated PHY control/data operation. In one embodiment, for UE 101, there is single uplink CVC within a component carrier. There could be single or multiple uplink CVCs within a component carrier from system aspects.

Besides the DL and UL CVCs that carry control information, one or more DL and UL dedicated VCs (DVCs) are configured for UE 101. A DL DVC is used for data services only. In one embodiment, the bandwidth & physical location in frequency domain are configurable by RRC-layer signaling. One or more UL DVCs may also configured for UE 101. There is no common PHY control for random access (RACH). There are channels and reference signals, such as pilots for demodulation or channel state information measurement, to support dedicated PHY control/data operation. The dedicated PHY control is used at least for HARQ-ACK, channel state information (CSI) feedback. For both the DL DVC and the UL DVC, the bandwidth & physical location in frequency domain are configurable by RRC-layer signaling.

Figure 1 further shows simplified block diagrams of wireless stations 101 and base station 102.

Base station 102 has an antenna 126, which transmits and receives radio signals. A RF transceiver module 123, coupled with the antenna, receives RF signals from antenna 126, converts them to baseband signals and sends them to processor 122. RF transceiver 123 also converts received baseband signals from processor 122, converts them to RF signals, and sends out to antenna 126. Processor 122 processes the received baseband signals and invokes different functional modules to perform features in base station 102. Memory 121 stores program instructions and data 124 to control the operations of base station 102. Base station 102 also includes a set of control modules, such as a component carrier (CC) configurator 181 that configures CCs, a CVC configurator 182 that configures CVCs, a DVC configurator 183 that configures DVCs, and a VC reconfiguration handler that reconfigures VCs.

UE 101 has an antenna 135, which transmits and receives radio signals. A RF transceiver module 134, coupled with the antenna, receives RF signals from antenna 135, converts them to baseband signals and sends them to processor 132. RF transceiver 134 also converts received baseband signals from processor 132, converts them to RF signals, and sends out to antenna 135. Processor 132 processes the received baseband signals and invokes different functional modules to perform features in mobile station 101. Memory 131 stores program instructions and data 136 to control the operations of mobile station 101.

UE 101 also includes a set of control modules that carry out functional tasks. A network entry handler 191 acquires synchronization and system information with a first channel bandwidth in a wireless network, wherein the first channel bandwidth is a default bandwidth configured by the wireless network, and wherein one or more component carriers is configured. A common virtual carrier handler 192 configures a DL CVC and a UL CVC, wherein a virtual carrier (VC) is a block of physically contiguous radio resources within a component carrier, and wherein the DL CVC and UL CVC carry common/group-common PHY control information for the UE. A dedicated VC handler 193 configures one or more DL and UL dedicated virtual carriers (DVCs), wherein the one or more DL and UL DVCs carry data services. A VC switch handler 194 switches on or off one or more VCs.

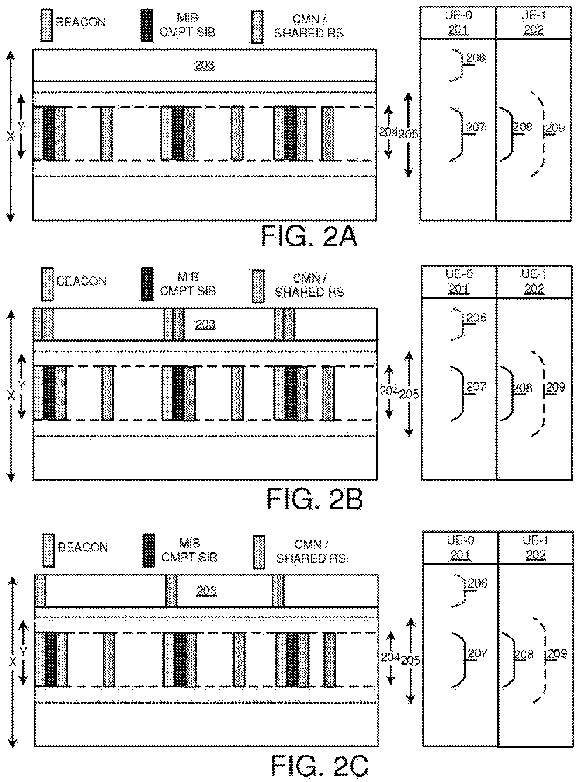

The virtual carriers are configured as different types including a DL CVC, a DL DVC, a UL CVC, and a UL DVC. In different embodiments, the different types of virtual carriers may carry different information. Figures 2A, 2B, and 2C illustrates different configurations for the virtual carriers.

Figure 2A illustrates an exemplary diagram of a DVC configured with no common/group-common PHY control information. Figure 2A shows a component carrier with a bandwidth of X MHz is configured into multiple VCs. A VC 203 is configured as a DVC. A VC 204 is configured as a CVC. A VC 205 is configured as a DVC. In one embodiment, the component carrier may be configured for multiple UEs. As shown, UE 201 is configured with CVC 207, which corresponds to the configured CVC 204. UE 201 is also configured with a DVC 206, which corresponds to the configured DVC 203. Similarly, UE 202 is configured with a CVC 208, which also corresponds to the configured CVC 204. UE 202 is also configured with a DVC 209, which corresponds to the configured DVC 205. As shown, DVC 205 may overlap with CVC 204. UE 201 has CVC and DVC in non-overlapping frequencies while UE 202 had CVC and DVC in overlapped frequencies. In one embodiment, the CVCs contain the beacon signal (or synchronization signals), the MIB / compact SIB signal, and the common /shared reference signal. In one embodiment, DVC 203 has no common/group-common PHY control information.

Figure 2B illustrates an exemplary diagram of a DVC configured with beacon signal (or synchronization signals) and common/shared reference signal information. Similar to Figure 2A, multiple CVC and DVC are configured for the component carrier. Each UE 201 and 202 has the same CVC and DVC configuration. In one embodiment, the DVC also contains the beacon signal (or synchronization signals) and the common/shared reference signal.

Figure 2C illustrates an exemplary diagram of a DVC configured with common/shared reference signal (or synchronization signals) information. Similar to Figure 2A, multiple CVC and DVC are configured for the component carrier. Each UE 201 and 202 has the same CVC and DVC configuration. In one embodiment, the DVC also contains the common/shared reference signal.

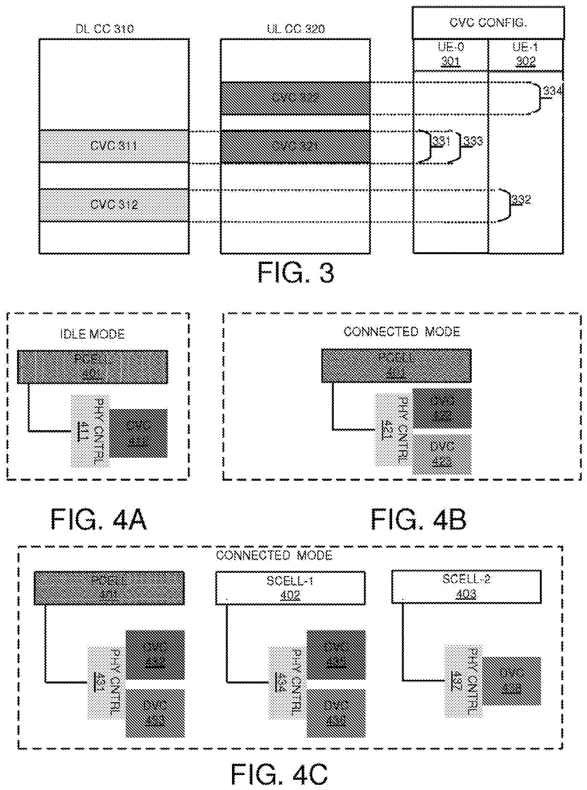

Figure 3 illustrates different configures of DL and UL CVCs for a UE. In one aspect, the UE is configured with a DL CVC and a UL CVC to carry the DL and UL control information, respectively. In one embodiment, the DL CVC and the UL CVC can have the same frequency location within a component carrier for TDD or unpaired spectrum. In another embodiment, the DL CVC and the UL CVC have different frequency locations within a component carrier for TDD or unpaired spectrum are located in different frequency bands for FDD or paired spectrum. A DL CC 310 is configured with two CVCs, CVC 311, and CVC 312. A UL CC 320 is configured with two CVCs, CVC 322, and CVC 321. As shown, UE 301 is configured with a DL CVC 331 corresponding to DL CVC 311, and a UL CVC 333 corresponding to UL CVC 321. DL CVC 311 and UL CVC 321 have the same frequency location within a component carrier for TDD or unpaired spectrum is located in different frequency bands for FDD or paired spectrum. In another embodiment, UE 302 is configured with a DL CVC 332 corresponding to DL CVC 312, and a UL CVC 334 corresponding to UL CVC 322. DL CVC 312 and UL CVC 322 have the different frequency locations within a component carrier for TDD or unpaired spectrum are located in different frequency bands for FDD or paired spectrum.

The UE configured with VCs may access search spaces, both the common search space and the UE-specific search space differently based on the UE configuration and the VC configurations. In general, the UE in the idle mode, the UE operates with accessing the CVC in the Pcell only. For the UE in a connected mode, the UE can access in a Pcell the CVC only, or both the CVC and the DVC. For a UE in the connected mode, the UE can operate in the Scell with accessing the CVC only, or both the CVC and the DVC, or the DVC only. Figures 4A, 4B, and 4C illustrate different search-space access scheme for UE in the idle and the UE in the connected mode with different primary cell (PCell) and secondary cell (Scell) configuration.

Figures 4A shows an exemplary diagram for the UE in the idle mode, operates with accessing the CVC in the Pcell only. The UE access a PCell 401 in the idle mode. The UE accesses the CVC 412 of the PCell through a configuredregion of PHY control 411. As shown, when the UE accesses DL common VC only within PCell 401 only, the UE performs the detection for broadcast or UE-specific downlink control information in the common search space of the downlink physical control channel 411 over the DL common VC 412. The UE performs the detection for UE-specific downlink control information in the UE-specific search space, which could be in a different physical location from the common search space, of the downlink physical control channel 411 over the DL common VC 412.

Figure 4B shows an exemplary diagram for UE in a connected mode, the UE can access in a CVC and DVC in the PCell. The UE access a PCell 401 in the connected mode. The UE accesses the CVC 422 and DVC 423 of the PCell through a configuredregion of PHY control 421 of PCell 401. As shown, when the UE accesses both DL CVC 422 and at least one DL DVC 423 within a primary component carrier 401, the UE performs the detection for broadcast or UE-specific downlink control information in the common search space of the downlink control channel over the DL common VC. The UE performs the detection for UE-specific downlink control information in the UE-specific search space of the downlink control channel. In one embodiment, the UE performs the detection for the UE-specific downlink control information in the UE-specific search space over the aggregated radio resources of the DL common VC and all dedicated VC(s). In another embodiment, the UE performs the detection for the UE-specific downlink control information in the UE-specific search space over the aggregated radio resources of all dedicated VC(s).

Figure 4C shows an exemplary diagram for UE in a connected mode, the UE can access in a SCell. The UE access a PCell 401, a SCell 402, and a SCell 403 in the connected mode. The UE accesses the CVC 432 and DVC 433 of the PCell through a configuredregion of PHY control 431 of PCell 401. The UE accesses the CVC 435 and DVC 436 of the SCell 402 through a configuredregion of PHY control 434. The UE accesses the DVC 438 of the SCell 403 through a configuredregion of PHY control 437. In one embodiment, when the UE accesses DL CVC 435 only within a secondary component carrier, the UE performs the detection for UE-specific downlink control information in the UE-specific search space of the downlink physical control channel over the DL common VC. In another embodiment, when the UE accesses both DL CVC 435 and at least one DL DVC 436 within a secondary component carrier 402, the UE performs the detection for UE-specific downlink control information in the UE-specific search space-1 of the downlink control channel over the DL common VC. The UE performs the detection for UE-specific downlink control information in the UE-specific search space-2 of the downlink control channel over the DL dedicated VC. In one embodiment, the UE performs the detection for UE-specific downlink control information in the UE-specific search space over the aggregated radio resources of the DL common VC and all dedicated VC(s). In another embodiment, the UE performs the detection for UE-specific downlink control information in the UE-specific search space over the aggregated radio resources of all dedicated VC(s). In yet another embodiment, when the UE can access DVC 438 only within a secondary component carrier 403, the UE-specific search space for UE-specific downlink control information (DCI) is defined within the physical DL control channel over the DL dedicated VC(s). In one embodiment, the UE performs UE-specific search space for UE-specific DCI Over the aggregated radio resources of all dedicated VC(s).

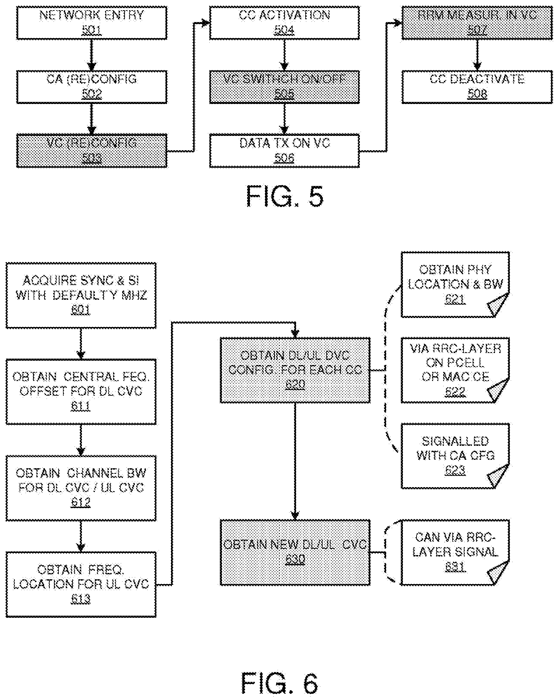

Figure 5 illustrates an exemplary flow diagram of the virtual carrier operation procedure. At step 501, the UE performs network entry. At step 502, the UE performs the carrier aggregation (CA) configuration or reconfiguration. At step 503, the UE performs the VC configuration or reconfiguration. At step 504, the UE performs component carrier (CC) activation. At step 505, the UE performs VC switch on or switch off operation. At step 506, the UE performs data transmission on the configured VCs. At step 507, the UE performs RRM measurements on the VCs. At step 508, the UE deactivates the CC.

Figure 6 illustrates an exemplary flow diagram of the network entry and virtual carrier configuration procedure. At step 601, the UE acquires synchronization and system information with a default bandwidth of Y MHz. In one embodiment for a PCell using NRAI anchor, with 60Khz subcarrier space, Y=20MHz. In one embodiment, for the NRAI anchor, beacon signal (or synchronization signals) and MIB or compact SIB is used. At step 611, the UE obtains a central frequency offset value for the DL CVC. In one embodiment, the offset value is broadcasted in the system information. At step 612, the UE obtains the channel bandwidth for the DL CVC and the UL CVC. In one embodiment, the value of the channel bandwidth can be adjusted based on predefined criteria. In one embodiment, the predefined criterion is the load of the idle-mode UEs. It is appliedfor the following procedures on DL/UL CVC of Pcell, e.g. RACH for RRC-layer connection, UE capability negotiation, and RRC-layer configuration. At step 613, the UE obtains the physical location for the UL CVC. At step 620, the UE obtains DL and/or UL DVC configuration for each CC. In one embodiment, the DVC configuration is obtained through RRC-layer signaling on the PCell. The DVC configuration includes all potential DVCs for a component carrier. DVC configuration should include at least physical location & bandwidth of each DVC for a component carrier. The DVC configuration can be signaled together with CA configuration. In another embodiment, the DVC configuration is obtained through MAC CE. The DVC reconfiguration is transmitted on PCell. At step 630, the UE obtains new DL and/or UL CVC configuration. In one embodiment, when the configuration of DL/UL CVC is changed, UE can obtain new configuration of DL/UL CVC via RRC-layer signaling on Pcell without receiving updated system information.

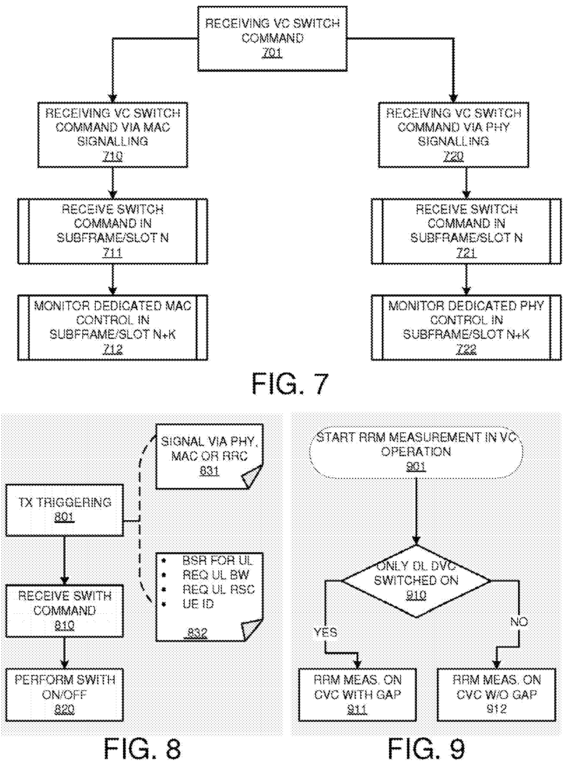

Figure 7 illustrates an exemplary flow diagram of virtual carrier switch-on/off procedure. At step 701, the UE receives VC switch on/off command. In one embodiment, the VC switch command is received via MAC signaling at step 710. The MAC signaling includes at least a bitmap indicating all potential VC configurations signaled by RRC-layer signaling. The UE receives the switch command in subframe (or slot) N at step 711. The UE monitors the dedicated MAC control in subframe (or slot) N+K, wherein the K is predefined constant integer. In one embodiment, a single dedicated PHY control to schedule data transmission over the aggregated data region of all switched-on DL VCs on a component carrier. The UE always obtains common PHY control on DL CVC of PCell.

According to the invention, the VC switch command is received via PHY signaling at step 720. In one embodiment, the PHY signaling consists of at least a bitmap indicating all potential VC configurations signaled by RRC-layer signaling. The UE receives the switch command in subframe (or slot) N at step 711. The UE monitors the dedicated PHY control in subframe (or slot) N+K, wherein the K is predefined constant integer. In one embodiment, a single dedicated PHY control to schedule data transmission over the aggregated data region of all switched-on DL VCs on a component carrier. The UE always obtains common PHY control on DL CVC of PCell.

Figure 8 illustrates an exemplary flow diagram of UE triggered UL VC switch command. At step 801, the UE transmit triggering signal via dedicated PHY signalling (according to the invetion), MAC or RRC-layer signalling (not according to the invention) (step 831), including at least one of the following information: Buffer status report for UL, Requested UL bandwidth, Requested UL resources, and UE identification (step 832). At step 810, the UE receives UL VC configuration switch command from the network after transmitting the triggering signal. At step 820, the UE performs switch on/off operation based on the received switch command from the network.

Figure 9 illustrates an exemplary flow diagram of the RRM measurement for virtual carriers. At step 901, the UE starts the RRM measurement in the VC operation. At step 910, the UE determines whether only the DL DVC is switched-on. If step 910 determines yes, the UE performs RRM measurement on the CVC with a gap. It implies UE does not have the capability to monitor PHY control on both DL CVC and DL DVC at the same time. The UE monitors PHY control on DL DVC and switch its center frequency back to DL CVC during the configured measurement gap for RRM measurement periodically. If step 910 determines no, the UE performs RRM measurement on the CVC without a gap. It implies UE has the capability to monitor PHY control on both DL CVC and DL DVC at the same time.

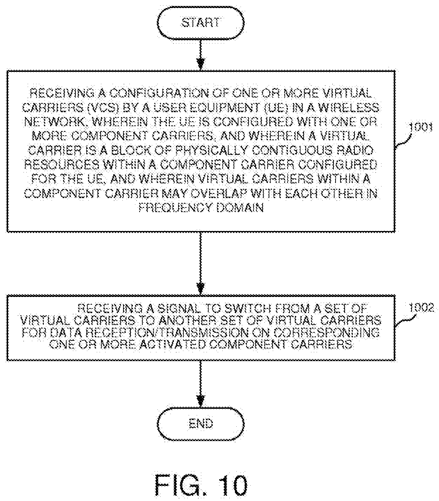

Figure 10 shows an exemplary flow chart of the UE performing network entry and VC configuration in a VC operation. At step 1001, the UE receives a configuration of one or more virtual carriers (VCs)in a wireless network, wherein the UE is configured with one or more component carriers, and wherein a virtual carrier is a block of physically contiguous radio resources within a component carrier configured for the UE, and wherein virtual carriers within a component carrier may overlap with each other in frequency domain. At step 1002, the UE receives a signal to switch from a set of virtual carriers to another set of virtual carriers for data reception/transmission on corresponding one or more activated component carriers.

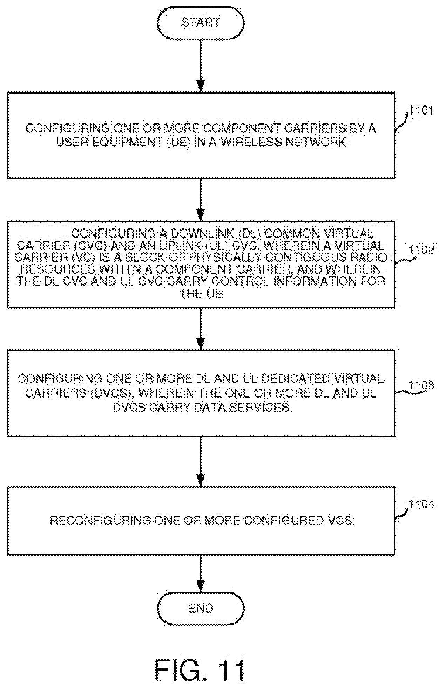

Figure 11 shows an exemplary flow chart of the UE performing VC switch command in a VC operation. At step 1101, the UE configures one or more component carriers in a wireless network. At step 1102, the UE configures a downlink (DL) common virtual carrier (CVC) and an uplink (UL) CVC, wherein a virtual carrier (VC) is a block of physically contiguous radio resources within a component carrier, and wherein the DL CVC and UL CVC carry control information for the UE. At step 1103, the UE configures one or more DL and UL dedicated virtual carriers (DVCs), wherein the one or more DL and UL DVCs carry data services. At step 1104, the UE reconfigures one or more configured VCs.

Although the present invention has been described in connection with certain specific embodiments for instructional purposes, the present invention is not limited thereto.Accordingly, various modifications, adaptations, and combinations of various features of the described embodiments can be practiced without departing from the scope of the invention as set forth in the claims.

## Claims

1. A method comprising:
configuring, by a base station (102), one or more component carriers at a user equipment, UE (101), in a wireless network;
receiving, by the UE (101) in the wireless network (100), a configuration of one or more virtual carriers, VCs, wherein the UE is configured with one or more component carriers, and wherein a virtual carrier is a block of physically contiguous radio resources within a component carrier configured for the UE (101); and
configuring a downlink, DL, common virtual carrier, CVC (204), and an uplink, UL, CVC, wherein the DL CVC and UL CVC carry control information for the UE;
configuring one or more DL and UL dedicated virtual carriers, DVCs (205), wherein the one or more DL and UL DVCs carry data services; and
reconfiguring one or more configured VCs;
wherein the reconfiguring comprises: receiving, through a PHY signaling, a VC configuration switch command to switch from the virtual carrier to another virtual carrier for data reception/transmission on one or more activated component carriers of the one or more component carriers and subsequently reconfiguring one or more configured VCs by switching on or off the one or more configured VCs based on the received switch command;
**characterised in that**
the UE obtains configurations for the DL CVC, the UL CVC, and the one or more DL and UL DVCs through a radio resource control-layer signaling, RRC-layer signaling, and wherein the switch command comprises a bitmap indicating all potential VC configurations signaled by the RRC-layer signaling.

2. The method of claim 1, wherein each virtual carrier is configured to be one of VC types comprising: a DL CVC, a UL CVC, a DL DVC and a UL DVC;
wherein the DL common virtual carrier, the UL common virtual carrier, the DL dedicated virtual carrier, and the UL dedicated virtual carrier support data services for the UE; the DL common virtual carrier carries DL common PHY control and system information acquisition for network entry and the UL common virtual carrier carries UL common PHY control for random access for network entry for the UE.

3. The method of claim 2, wherein UE obtains configurations for DL and UL CVC through system information.

4. The method of claim 3, wherein the DL CVC is configured on a primary cell, Pcell (401), component carrier and wherein the configuring of the DL CVC involves:
obtaining a central frequency offset value of the DL CVC (611), and
obtaining a DL-CVC channel bandwidth for the DL CVC from system information (612); or
wherein the configuring of the UL CVC involves: obtaining a physical location and a UL-CVC channel bandwidth from system information (621).

5. The method of claim 2, wherein UE obtains configurations for DL and UL dedicated virtual carrier through the RRC-layer signaling;
wherein preferably the configuring of the one or more DL and UL DVCs involves: obtaining a DVC configuration for each configured component carrier through the RRC-layer signaling on a primary cell, PCell, (620, 622).

6. The method of claim 2, wherein the UE obtains the configurations of DL and UL dedicated virtual carrier through MAC CE;
wherein preferably the DVC configuration for a corresponding DVC comprises a physical location and a channel bandwidth for the corresponding DVC (621).

7. The method of claim 2, further comprising: obtaining a new CVC configuration through the RRC-layer signaling on a primary cell, Pcell, (630, 631).

8. The method of claim 2, wherein the UE only accesses DL CVC on a primary cell, PCell, and wherein the UE monitors downlink control information, DCI, over a reserved DL control region within the DL CVC; or
wherein the UE accesses DL CVC and one or more DL DVCs on a primary cell, PCell, and wherein the UE monitors broadcasting DCI over a reserved DL control region within the DL CVC, and wherein the UE monitors UE-specific DCI over aggregated radio resources selected from one of PCell resources comprising: a control region within the DL CVC, aggregated radio resources of the DL CVC and all DL DVCs, and over aggregated radio resources of all DL DVCs; or
wherein the UE only accesses DL CVC on a secondary cell, SCell, and wherein the UE monitors a UE-specific downlink control information, DCI, over a reserved DL control region within the DL CVC; or
wherein the UE accesses DL CVC and one or more DL DVCs on a secondary cell, SCell, and wherein the UE monitors UE-specific DCI over-aggregated radio resources selected from one of SCell resources comprising: a control region within the DL CVC, aggregated radio resources of the DL CVC and all DL DVCs, and over aggregated radio resources of all DL DVCs; or
wherein the UE only accesses one or more DL DVCs on a secondary cell, SCell, and wherein the UE monitors a UE-specific downlink control information, DCI, over aggregated radio resources of all DL DVCs.

9. The method of claim 2, further comprising:
performing a radio resource management, RRM, measurement on the DL CVC without measurement gap if both the DL CVC and the one or more DL DVCs within a component carrier are switched on, otherwise, performing a RRM measurement on the DL CVC with a measurement gap, when only the one or more DL DVCs within a component carrier are switched on.

10. The method of claim 1, wherein the UE receives the switch command in a subframe N, further comprising: monitoring a dedicated PHY control on switched-on DL VCs in subframe N+K, wherein K is a preconfigured constant integer (722).

11. The method of claim 1, further comprising:
transmitting a triggering signal to the wireless network (801);
receiving a switch command for a UL VC configuration based on the transmitted triggering signal (810); and
subsequently, reconfiguring one or more configured UL VCs based on the received switch command;
wherein preferably the triggering signal is sent through a signaling selected from a signaling group comprising: a dedicated PHY signaling, a MAC signaling, and the RRC-layer signaling (831); or
wherein preferably the triggering signal comprises at least one element comprising: a buffer status report for UL, a requested UL bandwidth, requested UL resources, and a UE identification (832).

12. A user equipment, UE, comprising:
a network entry handler (191) that acquires synchronization and system information with a first channel bandwidth in a wireless network, wherein the first channel bandwidth is a default bandwidth configured by the wireless network, and wherein one or more component carriers is configured;
a common virtual carrier handler (192) that configures a downlink, DL, common virtual carrier, CVC (204), and an uplink, UL, CVC, wherein a virtual carrier, VC, is a block of physically contiguous radio resources within a component carrier, and wherein the DL CVC and UL CVC carry control information for the UE; and
a dedicated VC handler (193) that configures one or more DL and UL dedicated virtual carriers, DVCs (205), wherein the one or more DL and UL DVCs carry data services;
wherein the UE comprises a VC switch handler (194) that switches on or off one or more of the DL CVC, the UL CVC, and the one or more DL and UL DVCs by receiving a switch command
**characterised in that**
the switch command is received through a PHY signaling:
wherein the UE obtains configurations for the DL CVC, the UL CVC, and the one or more DL and UL DVCs through an RRC-layer signaling, and wherein the switch command comprises a bitmap indicating all potential VC configurations signaled by the RRC-layer signaling.

## Patentansprüche

1. Verfahren, umfassend:
Konfigurieren, durch eine Basisstation (102), eines oder mehrerer Komponententräger an einer Teilnehmerausrüstung, UE (101), in einem Funknetzwerk;
Empfangen, durch die UE (101) in dem Funknetzwerk (100), einer Konfiguration eines oder mehrerer virtueller Träger, VCs, wobei die UE mit einem oder mehreren Komponententrägern konfiguriert ist, und wobei ein virtueller Träger ein Block von physikalisch benachbarten Funkressourcen innerhalb eines Komponententrägers ist, der für die UE (101) konfiguriert ist; und
Konfigurieren eines Downlink, DL, allgemeinen virtuellen Trägers, CVC (204), und eines Uplink-, UL-, CVCs, wobei der DL-CVC und der UL-CVC Steuerinformationen für die UE übertragen;
Konfigurieren eines oder mehrerer DL und UL dedizierter virtueller Träger, DVCs (205), wobei der eine oder die mehreren DL- und UL-DVCs Datendienste übertragen; und
Rekonfigurieren eines oder mehrerer konfigurierter VCs;
wobei das Rekonfigurieren umfasst: Empfangen, durch eine PHY-Signalisierung, eines VC-Konfigurationsumschaltkommandos, um von dem virtuellen Träger auf einen anderen virtuellen Träger für Datenempfang/-übertragung auf einem oder mehreren aktivierten Komponententrägern des einen oder der mehreren Komponententräger zu wechseln, und anschließendes Rekonfigurieren des einen oder der mehreren konfigurierten VCs durch Ein- oder Ausschalten des einen oder der mehreren konfigurierten VCs basierend auf dem empfangen Umschaltkommando;
**dadurch gekennzeichnet, dass** die UE Konfigurationen für den DL-CVC, den UL-CVC und den einen oder die mehreren DL- und UL-DVCs durch eine Funkressourcensteuerungsschicht-Signalisierung, RRC-Schicht-Signalisierung, erhält, und wobei das Umschaltkommando eine Bitzuordnung aufweist, die alle potentiellen VC-Konfigurationen anzeigt, die durch die RRC-Schicht-Signalisierung signalisiert werden.

2. Verfahren gemäß Anspruch 1, wobei jeder virtuelle Träger so konfiguriert ist, dass er einer von den VC-Typen ist, die umfassen: einen DL-CVC, einen UL-CVC, einen DL-DVC und einen UL-DVC;
wobei der DL allgemeine virtuelle Träger, der UL allgemeine virtuelle Träger, der DL dedizierte virtuelle Träger und der UL dedizierte virtuelle Träger Datendienste für die UE unterstützen; der DL allgemeine virtuelle Träger DL allgemeine PHY-Steuerung und Systeminformationserfassung für einen Netzwerkbeitritt überträgt und der UL allgemeine virtuelle Träger UL allgemeine PHY-Steuerung für einen Zufallszugriff für einen Netzwerkbeitritt für die UE überträgt.

3. Verfahren gemäß Anspruch 2, wobei die UE Konfigurationen für den DL- und UL-CVC durch Systeminformationen erhält.

4. Verfahren gemäß Anspruch 3, wobei der DL-CVC auf einem Primärzellen-, Pcell-(401), Komponententräger konfiguriert ist, und wobei das Konfigurieren des DL-CVCs einbezieht:
Erhalten eines Mittenfrequenzversatzwerts des DL-CVCs (611), und
Erhalten einer DL-CVC-Kanalbandbreite für den DL-CVC von Systeminformationen (612); oder
wobei das Konfigurieren des UL-CVCs einbezieht: Erhalten einer physikalischen Lage und einer UL-CVC-Kanalbandbreite von Systeminformationen (621).

5. Verfahren gemäß Anspruch 2, wobei die UE Konfigurationen für DL und UL dedizierte virtuelle Träger durch die RRC-Schicht-Signalisierung erhält;
wobei das Konfigurieren des einen oder der mehreren DL- und UL-DVCs vorzugsweise einbezieht: Erhalten einer DVC-Konfiguration für jeden konfigurierten Komponententräger durch die RRC-Schicht-Signalisierung auf einer Primärzelle, PCell, (620, 622).

6. Verfahren gemäß Anspruch 2, wobei die UE die Konfigurationen von DL und UL dedizierten virtuellen Trägern durch eine MAC-CE erhält;
wobei die DVC-Konfiguration für einen korrespondierenden DVC vorzugsweise eine physikalische Lage und eine Kanalbandbreite für den korrespondierenden DVC aufweist (621).

7. Verfahren gemäß Anspruch 2, weiter umfassend: Erhalten einer neuen CVC-Konfiguration durch die RRC-Schicht-Signalisierung auf einer Primärzelle, Pcell, (630, 631).

8. Verfahren gemäß Anspruch 2, wobei die UE nur auf den DL-CVC auf einer Primärzelle, PCell, zugreift, und wobei die UE Downlink-Steuerinformationen, DCI, über einen reservierten DL-Steuerbereich innerhalb des DL-CVCs beobachtet; oder
wobei die UE auf den DL-CVC und einen oder mehrere DL-DVCs auf einer Primärzelle, PCell, zugreift, und wobei die UE Broadcasting-DCI über einen reservierten DL-Steuerbereich innerhalb des DL-CVCs beobachtet, und wobei die UE UE-spezifische DCI über zusammengefasste Funkressourcen, die aus einer von PCell-Ressourcen ausgewählt werden, die umfassen: einen Steuerbereich innerhalb des DL-CVCs, zusammengefasste Funkressourcen des DL-CVCs und aller DL-DVCs, und über zusammengefasste Funkressourcen aller DL-DVCs beobachtet; oder
wobei die UE nur auf den DL-CVC auf einer Sekundärzelle, SCell, zugreift, und wobei die UE eine UE-spezifische Downlink-Steuerinformation, DCI, über einen reservierten DL-Steuerbereich innerhalb des DL-CVCs beobachtet; oder
wobei die UE auf den DL-CVC und einen oder mehrere DL-DVCs auf einer Sekundärzelle, SCell, zugreift, und wobei die UE UE-spezifische DCI über zusammengefasste Funkressourcen, die aus einer von SCell-Ressourcen ausgewählt werden, die umfassen: einen Steuerbereich innerhalb des DL-CVCs, zusammengefasste Funkressourcen des DL-CVCs und aller DL-DVCs, und über zusammengefasste Funkressourcen aller DL-DVCs beobachtet; oder
wobei die UE nur auf einen oder mehrere DL-DVCs auf einer Sekundärzelle, SCell, zugreift, und wobei die UE eine UE-spezifische Downlink-Steuerinformation, DCI, über zusammengefasste Funkressourcen aller DL-DVCs beobachtet.

9. Verfahren gemäß Anspruch 2, weiter umfassend:
Ausführen einer Funkressourcenmanagement-, RRM-, Messung auf dem DL-CVC ohne eine Messungslücke, wenn sowohl der DL-CVC als auch der eine oder die mehreren DL-DVCs innerhalb eines Komponententrägers eingeschaltet sind, andernfalls Ausführen einer RRM-Messung auf dem DL-CVC mit einer Messungslücke, wenn nur der eine oder die mehreren DL-DVCs innerhalb eines Komponententrägers eingeschaltet sind.

10. Verfahren gemäß Anspruch 1, wobei die UE das Umschaltkommando in einem Unterrahmen N empfängt, weiter umfassend: Beobachten einer dedizierten PHY-Steuerung auf eingeschalteten DL-VCs in einem Unterrahmen N+K, wobei K eine vorkonfigurierte konstante ganze Zahl ist (722).

11. Verfahren gemäß Anspruch 1, weiter umfassend:
Übertragen eines Auslösesignals an das Funknetzwerk (801);
Empfangen eines Umschaltkommandos für eine UL-VC-Konfiguration basierend auf dem übertragenen Auslösesignal (810); und
anschließend Rekonfigurieren eines oder mehrerer konfigurierter UL-VCs basierend auf dem empfangenen Umschaltkommando;
wobei das Auslösesignal vorzugsweise durch eine Signalisierung gesendet wird, die aus einer Signalisierungsgruppe ausgewählt wird, die umfasst: eine dedizierte PHY-Signalisierung, eine MAC-Signalisierung und die RRC-Schicht-Signalisierung (831); oder
wobei das Auslösesignal vorzugsweise mindestens ein Element aufweist, das umfasst: einen Pufferstatusbericht für UL, eine angeforderte UL-Bandbreite, angeforderte UL-Ressourcen und eine UE-Identifikation (832).

12. Teilnehmerausrüstung, UE, aufweisend:
einen Netzwerkbeitrittsbehandler (191), welcher Synchronisations- und Systeminformationen mit einer ersten Kanalbandbreite in einem Funknetzwerk erwirbt, wobei die erste Kanalbandbreite eine Vorgabebandbreite ist, die durch das Funknetzwerk konfiguriert ist, und wobei ein oder mehrere Komponententräger konfiguriert sind;
einen allgemeiner-virtueller-Träger-Behandler (192), welcher einen Downlink, DL, allgemeinen virtuellen Träger, CVC (204) und einen Uplink-, UL-, CVC konfiguriert, wobei ein virtueller Träger, VC, ein Block von physikalisch benachbarten Funkressourcen innerhalb eines Komponententrägers ist, und wobei der DL-CVC und der UL-CVC Steuerinformationen für die UE übertragen; und
einen dedizierter-VC-Behandler (193), welcher einen oder mehrere DL und UL dedizierte virtuelle Träger, DVCs (205), konfiguriert, wobei der eine oder die mehreren DL- und UL-DVCs Datendienste übertragen;
wobei die UE einen VC-Umschaltbehandler (194) aufweist, welcher einen oder mehrere des DL-CVCs, des UL-CVCs und des einen oder der mehreren DL- und UL-DVCs durch ein Empfangen eines Umschaltkommandos ein- oder ausschaltet,
**dadurch gekennzeichnet, dass**
das Umschaltkommando durch eine PHY-Signalisierung empfangen wird;
wobei die UE Konfigurationen für den DL-CVC, den UL-CVC und den einen oder die mehreren DL- und UL-DVCs durch eine RRC-Schicht-Signalisierung erhält, und wobei das Umschaltkommando eine Bitzuordnung aufweist, die alle potentiellen VC-Konfigurationen anzeigt, die durch die RRC-Schicht-Signalisierung signalisiert werden.

## Revendications

1. Procédé comprenant :
la configuration, par une station de base (102) d'une ou de plusieurs porteuses de composante au niveau d'un équipement utilisateur, UE (101), dans un réseau sans fil ;
la réception, par l'UE (101) dans le réseau sans fil (100), d'une configuration d'une ou de plusieurs porteuses virtuelles, VC, dans lequel l'UE est configuré avec une ou plusieurs porteuses de composante, et dans lequel une porteuse virtuelle est un bloc de ressources radio contigües physiques dans une porteuse de composante configurée pour l'UE (101) ; et
la configuration d'une porteuse virtuelle commune, CVC (204) de liaison descendante, DL, et d'une CVC de liaison ascendante, UL, dans lequel la CVC DL et la CVC UL portent des informations de commande pour l'UE ;
la configuration d'une ou de plusieurs porteuses virtuelles dédiées, DVC, (205), de DL et UL, dans lequel la ou les plusieurs DVC DL et UL portent des services de données ; et
la reconfiguration d'une ou de plusieurs VC configurées ;
dans lequel la reconfiguration comprend : la réception, à travers une signalisation PHY, d'une commande de commutation de configuration VC pour commuter de la porteuse virtuelle vers une autre porteuse virtuelle en vue d'une réception/ transmission de données sur une ou sur plusieurs porteuses de composante activées de la ou des plusieurs porteuses de composante et la reconfiguration ensuite d'une ou de plusieurs VC configurées par l'activation ou la désactivation de la ou des plusieurs VC configurées sur la base de la commande de commutation reçue ;
**caractérisé en ce que**
l'UE obtient des configurations pour la CVC DL, la CVC UL et la ou les plusieurs DVC DL et UL à travers une signalisation de couche de commande de ressource radio, signalisation de couche RRC, et dans lequel la commande de commutation comprend une table de bits indiquant toutes les configurations de VC potentielles signalées par la signalisation de couche RRC.

2. Procédé de la revendication 1, dans lequel chaque porteuse virtuelle est configurée pour être l'un des types de VC comprenant : une CVC DL, une CVC UL, une DVC DL et une DVC UL ;
dans lequel la porteuse virtuelle commune DL, la porteuse virtuelle commune UL, la porteuse virtuelle dédiée DL et la porteuse virtuelle dédiée UL prennent en charge des services de données pour l'UE ; la porteuse virtuelle commune DL porte une commande PHY commune DL et une acquisition d'informations de système pour une entrée de réseau et la porteuse virtuelle commune UL porte une commande PHY commune UL pour un accès aléatoire pour une entrée de réseau pour l'UE.

3. Procédé de la revendication 2, dans lequel l'UE obtient des configurations pour les CVC DL et UL à travers des informations de système.

4. Procédé de la revendication 3, dans lequel la CVC DL est configurée sur une porteuse de composante de cellule primaire, Pcell (401) et dans lequel la configuration de la CVC DL implique :
l'obtention d'une valeur de décalage de fréquence centrale de la CVC DL (611) ; et
l'obtention d'une bande passante de canal CVC-DL pour la CVC DL à partir d'informations de système (612) ; ou
dans lequel la configuration de la CVC UL implique : l'obtention d'une position physique et d'une bande passante de canal CVC-UL à partir d'informations de système (621).

5. Procédé de la revendication 2, dans lequel l'UE obtient des configurations pour la porteuse virtuelle dédiée DL et UL à travers la signalisation de couche-RRC ;
dans lequel de préférence la configuration de la ou des plusieurs DVC DL et UL implique :
l'obtention d'une configuration de DVC pour chaque porteuse de composante configurée à travers la signalisation de couche-RRC sur une cellule primaire, PCell (620, 622).

6. Procédé de la revendication 2, dans lequel l'UE obtient les configurations des porteuses virtuelles dédiées DL et UL à travers un CE MAC ;
dans lequel de préférence la configuration de DVC pour une DVC correspondante comprend une position physique et une bande passante de canal pour la DVC correspondante (621).

7. Procédé de la revendication 2, comprenant en outre : l'obtention d'une nouvelle configuration de CVC à travers la signalisation de couche-RRC sur une cellule primaire, Pcell (630, 631).

8. Procédé de la revendication 2, dans lequel l'UE accède uniquement à la CVC DL sur une cellule primaire, PCell, et dans lequel l'UE surveille des informations de commande de liaison descendante, DCI, sur une région de commande de DL réservée dans la CVC DL ; ou
dans lequel l'UE accède à la CVC DL et à une ou plusieurs DVC DL sur une cellule primaire, PCell, et dans lequel l'UE surveille la diffusion de DCI sur une région de commande de DL réservée dans la CVC DL, et dans lequel l'UE surveille des DCI spécifiques à un UE sur des ressources radio agrégées sélectionnées parmi l'une des ressources PCell comprenant : une région de commande dans la CVC DL, des ressources radio agrégées de la CVC DL et de l'ensemble des DVC DL, et sur des ressources radio agrégées de l'ensemble des DVC DL ; ou
dans lequel l'UE accède uniquement à la CVC DL sur une cellule auxiliaire, SCell, et dans lequel l'UE surveille des informations de commande de liaison descendante, DCI, spécifiques à un utilisateur sur une région de commande DL réservée dans la CVC DL ; ou
dans lequel l'UE accède à la CVC DL et à une ou plusieurs DVC DL sur une cellule auxiliaire, SCell, et dans lequel l'UE surveille des DCI spécifiques à un UE sur des ressources radio agrégées sélectionnées parmi l'une des ressources SCell comprenant : une région de commande dans la CVC DL, des ressources radio agrégées de la CVC DL et de l'ensemble des DVC DL et des ressources radio agrégées de l'ensemble des DVC DL ; ou
dans lequel l'UE accède uniquement à une ou plusieurs DVC DL sur une cellule auxiliaire, SCell, et dans lequel l'UE surveille des informations de commande de liaison descendante, DCI, spécifiques à un UE, sur des ressources radio agrégées de l'ensemble des DVC DL.

9. Procédé de la revendication 2, comprenant en outre :
la réalisation d'une mesure de gestion de ressources radio, RRM, sur la CVC DL sans espace de mesure si à la fois la CVC DL et la ou les plusieurs DVC DL dans une porteuse de composante sont activées, autrement, la réalisation d'une mesure RRM sur la CVC DL avec un espace de mesure, lorsque seulement la ou les plusieurs DVC DL dans une porteuse de composante sont activées.

10. Procédé de la revendication 1, dans lequel l'UE reçoit la commande de commutation dans une sous-trame N, comprenant en outre : la surveillance d'une commande PHY dédiée sur une VC DL activée dans une sous-trame N+K, dans lequel K est un entier constant préconfiguré (722).

11. Procédé de la revendication 1, comprenant en outre :
la transmission d'un signal de déclenchement au réseau sans fil (801) ;
la réception d'une commande de commutation pour une configuration de VC UL sur la base du signal de déclenchement transmis (810) ; et
la reconfiguration ensuite d'une ou de plusieurs VC UL configurées sur la base de la commande de commutation reçue ;
dans lequel de préférence le signal de déclenchement est envoyé à travers une signalisation sélectionnée parmi un groupe de signalisations comprenant : une signalisation PHY dédiée, une signalisation MAC et la signalisation de couche RRC (831) ; ou
dans lequel de préférence le signal de déclenchement comprend au moins un élément comprenant : un rapport d'état de tampon pour une UL, une bande passante UL requise, des ressources UL requises et une identification d'UE (832).

12. Equipement utilisateur, UE, comprenant :
un gestionnaire d'entrée de réseau (191) qui acquiert des informations de synchronisation et de système avec une première bande passante de canal dans un réseau sans fil, dans lequel la première bande passante de canal est une bande passante par défaut configurée par le réseau sans fil, et dans lequel une ou plusieurs porteuses de composante sont configurées ;
un gestionnaire de porteuse virtuelle commune (192) qui configure une porteuse virtuelle commune, CVC (204) de liaison descendante, DL, et une CVC de liaison ascendante, UL, dans lequel une porteuse virtuelle, VC, est un bloc de ressources radio physiquement contiguës dans une porteuse de composante et dans lequel la CVC DL et la CVC UL portent des informations de commande pour l'UE ; et
un gestionnaire de VC dédiée (193) qui configure une ou plusieurs porteuses virtuelles dédiées, DVC (205), DL et UL, dans lequel la ou les plusieurs DVC DL et UL portent des services de données ;
dans lequel l'UE comprend un gestionnaire de commutation de VC (194) qui active ou désactive une ou plusieurs parmi la CVC DL, la CVC UL et la ou les plusieurs DVC DL et UL en recevant une commande de commutation
**caractérisé en ce que**
la commande de commutation est reçue à travers une signalisation PHY;
dans lequel l'UE obtient des configurations pour la CVC DL, la CVC UL et la ou les plusieurs DVC DL et UL à travers une signalisation de couche RRC et dans lequel la commande de commutation comprend une table de bits indiquant toutes les configurations de VC potentielles signalées par la signalisation de couche RRC.
